(19) Europäisches Patentamt
European Patent Office
Office européen des brevets

(11) **EP 1 641 216 B1**

(12) **EUROPÄISCHE PATENTSCHRIFT**

(45) Veröffentlichungstag und Bekanntmachung des Hinweises auf die Patenterteilung:
**02.04.2008 Patentblatt 2008/14**

(51) Int Cl.:
*H04L 29/08* <sup>(2006.01)</sup>     *G01S 5/00* <sup>(2006.01)</sup>
*G01S 5/14* <sup>(2006.01)</sup>     *B60R 16/02* <sup>(2006.01)</sup>
*G01C 21/00* <sup>(2006.01)</sup>

(21) Anmeldenummer: **05019278.0**

(22) Anmeldetag: **06.09.2005**

(54) **Trackingsystem**

Tracking system

Système de suivi de la position

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.09.2004 DE 102004048019**

(43) Veröffentlichungstag der Anmeldung:
**29.03.2006 Patentblatt 2006/13**

(73) Patentinhaber: **Deutsche Telekom AG**
**53113 Bonn (DE)**

(72) Erfinder: **Quade, Michael**
**53121 Bonn (DE)**

(56) Entgegenhaltungen:
**EP-A- 1 280 369**     **WO-A-01/54021**
**DE-A1- 10 004 525**     **US-A1- 2002 156 578**

EP 1 641 216 B1

**Beschreibung**

Die Erfindung bezieht sich auf ein autarkes mobiles Verfolgungssystem (Trackingsystem), welches sich automatisch selbst kalibriert.

So genannte Trackingsysteme dienen der Ortung mobiler Gegenstände oder Personen bzw. der Erstellung eines Bewegungsbildes des bewegten Objekts oder Subjekts. Entsprechende Systeme arbeiten in der Regel funkgestützt und werden für unterschiedlichste Zwecke, beispielsweise bei Kurierdiensten oder aber im Sicherheitsbereich, eingesetzt. Durch ein von dem zu überwachenden Fahrzeug oder der zu überwachenden Person mitgeführtes Gerät werden dabei in vorgegebenen Abständen Positionsdaten zumeist an eine Zentrale übertragen, wo sie durch eine dazu berechtigte Person abrufbar sind. Da sich bei den zur Übertragung der Positionsdaten verwendeten Übertragungssysteme die Zugangskennung dieses mobilen Gerätes ändern kann, wie dies beispielsweise beim Einsatz von GPRS durch die Verwendung dynamischer IP-Adressen gegeben ist, verfügen entsprechende Trackingsysteme im Allgemeinen nicht über einen Rückkanal. Dadurch besteht in der Regel nicht die Möglichkeit, dass die Zentrale, an welche die Positionsdaten üblicher Weise übertragen werden, selbst Kontakt zu einem mobilen Gerät aufnimmt, um dessen Position festzustellen bzw. abzufragen.

Damit dennoch jeweils möglichst aktuelle Positionsdaten eines mobilen Gerätes zur Verfügung stehen, überträgt das Gerät die entsprechenden Daten wiederholt in einem vorgegebenen festen Abstand. Die Festlegung dieses Abstandes kann zeit-und/oder streckenbezogen erfolgen. Der artige Systeme sind z.B. aus der US Patentanmeldung US 2002/0156578 bekannt.

Dabei stellt aber die Festlegung eines für eine hinreichend genaue Positionsüberwachung günstigen Abstandes zur wiederholten Übertragung der Positionsdaten (Ortungen), insbesondere bei bewegten Objekten oder Personen, deren Bewegungsverhalten sich häufig und/oder stark verändert, ein erhebliches Problem dar. Als Beispiel sei angenommen, das übliche Bewegungsprofil eines Fahrzeugs sei der Art, dass sich dieses an einem Tag bis zu 50 km in der Stadt und dann einige hundert Kilometer mit deutlich höherer Geschwindigkeit auf der Autobahn bewegt. Würde sich nun die Festlegung eines zeitlichen Abstandes an den Erfordernissen für die Fahrt des Fahrzeugs durch die Stadt orientieren, könnten zwar für diese Bewegungsphase größere zeitliche Abstände zwischen den Ortungen für eine hinreichend genaue Verfolgung des Fahrzeugweges festgelegt werden, jedoch wäre bei Beibehaltung des Ortungsabstandes für die Bewegungsphase auf der Autobahn keine ausreichende Genauigkeit zu erreichen. Sicherlich könnte der zeitliche und/oder örtliche Abstand unter dem Gesichtspunkt der Genauigkeit in jedem Falle hinreichend klein gewählt werden. Jedoch gilt es dabei zu beachten, dass zur Identifizierung eines in dem Fahrzeug befindlichen mobilen Endgerätes und der Mitteilung seiner aktuellen Position eine größere Zahl von Daten zu übertragen ist und dass jede Datenübertragung Kosten verursacht. Die generelle Festlegung eines kleinen bzw. geringen Abstandes führt folglich wiederum zu unangemessen hohen Kosten, da ein entsprechend kleiner Abstand häufig gar nicht erforderlich ist. Es wäre daher wünschenswert, die Festlegung des strecken- und/oder zeitbezogenen Abstandes für die Übertragung der Positionsdaten dynamisch an das Bewegungsverhalten des zu überwachenden Objektes (z.B. Kraftfahrzeug) beziehungsweise Subjektes (z.B. Person in einem Kraftfahrzeug) anpassen zu können. So wäre es beispielsweise zweckmäßig, wenn die Distanz zwischen zwei Ortungen, bei einer streckenbezogenen Festlegung des Abstandes, im Falle einer langen Überwachungsstrecke entsprechend größer wäre als bei einer kurzen Wegstrecke. Dies gilt entsprechend selbstverständlich auch sowohl für eine zeitbezogene Abstandsfestlegung, als auch für die Kombination aus strecken- und zeitbezogener Festlegung des Abstandes.

Aufgabe der Erfindung ist es, eine Lösung zur Verfügung zu stellen, welche eine automatische Kalibrierung eines autarken mobilen Trackingsystems im Hinblick auf den Abstand der Übertragung seiner Positionsdaten ermöglicht.

Die Aufgabe wird durch ein Trackingsystem mit den Merkmalen des Hauptanspruchs gelöst. Vorteilhafte Aus-beziehungsweise Weiterbildungen der Erfindung sind durch die Unteransprüche gegeben.

Das vorgeschlagene Trackingsystem besteht, wie grundsätzlich bereits bekannt, aus einem mobilen Telekommunikationsendgerät (im Weiteren auch MTEG), einer Positionsdatenquelle eines Positionsbestimmungssystems, welches Positionsdaten zum jeweils augenblicklichen Aufenthaltsort des mobilen Telekommunikationsendgerätes bereitstellt, und einer Zentrale, bei welcher zumindest der zuletzt festgestellte Aufenthaltsort des mobilen Telekommunikationsendgerätes durch einen dazu berechtigten Nutzer des Trackingsystems abfragbar ist. Dabei werden die jeweiligen Positionsdaten von der Positionsdatenquelle an das mobile Telekommunikationsendgerät übermittelt oder durch dieses von der Positionsdatenquelle abgerufen und über eine von dem mobilen Telekommunikationsendgerät zur Zentrale aufgebaute Telekommunikationsverbindung wiederholt an die Zentrale übertragen.

Bei dem erfindungsgemäßen Trackingsystem bilden Soft- und Hardwarekomponenten des mobilen Telekommunikationsendgerätes und/oder der Positionsdatenquelle die Regeleinheit eines Regelkreises aus, dessen Regelgröße die Anzahl der innerhalb eines festgelegten Intervalls vom mobilen Telekommunikationsendgerät zu der Zentrale jeweils zum Zweck der Übertragung von Positionsdaten hergestellten Verbindungen ist. Im Hinblick auf die gestellte Aufgabe einer automatischen Kalibrierung, besteht das Ziel der realisierten Regelung bzw. des Regelkreises darin, ein örtlich und/oder zeitlich möglichst hoch aufgelöstes Bewegungsbild eines das mobile Telekommunikationsendgerät mitführenden beweglichen Objekts oder Subjekts zu erhalten, dabei jedoch die für den Verbindungsaufbau zur Zentrale für die jeweilige Übermittlung von Positionsdaten entstehenden Kosten zu berücksichtigen und innerhalb bestimmter Grenzen zu halten. Als Sollwert für die Regelung wird daher eine bestimmte Anzahl entsprechender, innerhalb eines festgelegten Intervalls aufzubauender Verbindungen vorgegeben. Durch den gebildeten Regelkreis wird nun der Abstand zwischen den Übertragungen von Positionsdaten zur Zentrale auf der Grundlage eines iterativen Prozesses zeitlich und/oder streckenbezogen variiert, wobei unter dem streckenbezogenen Abstand die, zwischen zwei Verbindungsaufbauten zur Positionsdatenübertragung von dem mobilen Telekommunikationsendgerät bzw. dem dieses mitführenden Objekt (beispielsweise Fahrzeug mit integrierten MTEG) oder Subjekt (z. B. sich zu Fuß bewegende, mit einem MTEG ausgestatte Person) zurückgelegte Strecke verstanden werden soll.

In der Praxis handelt es sich beispielsweise bei dem mobilen Telekommunikationsendgerät um ein modernes, voll ausgestattetes Mobiltelefon bzw. Handy, ein Smartphone, einen PDA mit Verbindungsmöglichkeit zu einem Telekommunikationsnetz oder dergleichen. Als Positionsdatenquelle dient beispielsweise ein mit dem Handy oder Smartphone gekoppeltes GPS-Modul, also eine in das Global Positioning System einbezogene Empfangseinheit. Handy bzw. Smartphone (MTEG) und GPS-Modul sind Bestandteil eines Trackingsystems, bei dem wiederholt Positionsdaten zum jeweiligen Aufenthaltsort einer das MTEG mitführenden Person an eine Zentrale übertragen werden. Die Zentrale wird beispielsweise von einem Telekommunikationsprovider bzw. Mobilfunkbetreiber betrieben, welcher die Daten einem zur Abfrage berechtigten Auftraggeber, beispielsweise einem Kurierdienst, zur Verfügung stellt und die Nutzung des Systems vorzugsweise über die zur Übertragung der Positionsdaten vom MTEG jeweils aufzubauenden Mobilfunkverbindungen tariffiert. Dabei bucht der Kunde bzw. Nutzer innerhalb eines bestimmten zeitlichen Intervalls, beispielsweise eines Tages, eine bestimmte Anzahl derartiger Verbindungen zu feststehenden Konditionen, wobei vorzugsweise auch eine darüber hinausgehende Anzahl von Verbindungen möglich ist, diese aber möglicher Weise teurer sind. Durch den zur Selbstkalibrierung des Systems gebildeten Regelkreis erfolgt nun eine Regelung dahingehend, dass die Anzahl der gebuchten Verbindungen möglichst nicht überschritten wird, aber dennoch die Abstände zwischen den Übertragungen von Positionsdaten zur Zentrale so bemessen sind, dass mittels der Daten ein möglichst genaues Bewegungsbild für das MTEG bzw. des dieses mitführenden Objekts oder Subjekts ermöglicht ist. Das heißt, dass selbst, wenn sich beispielsweise die Geschwindigkeit eines mit einem entsprechenden Mobiltelefon ausgestatten Fahrzeugs häufiger ändert, möglichst keine Lücke in dessen Bewegungsbild entsteht, nur weil eventuell der Abstand zwischen zwei Verbindungsaufbauten zur Positionsdatenübermittlung (Ortungen) fest und zu groß gewählt wurde. Vielmehr wird der Abstand (zeitlich und/oder streckenbezogen) im Zuge eines iterativen Prozesses, mittels welchem das Bewegungsprofil des betrachteten Objekts oder Subjekts auf einen Regelkreis abgebildet wird, mit dem Ziel einer Anpassung an die bestehenden Bedingungen, einschließlich des für die Anzahl der Verbindungsaufbauten vorgegebenen Sollwerts, variiert. Dazu wird in einer Recheneinheit, die als solches zum Beispiel ohnehin Bestandteil moderner Handys ist, in Form einer von dieser Einheit abzuarbeitenden Software, ein entsprechender Algorithmus hinterlegt. Für die Abarbeitung des Algorithmus werden der Software bestimmte Randbedingungen, welche später noch beispielhaft erläutert werden sollen, sowie die Anzahl der beim Provider gebuchten Ortungen, übergeben. Hierbei ist es, eine administrative bzw. eine Frage des Tarifmodels, in welcher Weise insbesondere der Sollwert, also die Anzahl der gebuchten Ortungen der Regeleinheit übergeben wird. Dabei gilt es zu berücksichtigen, dass eine Regelung im Allgemeinen auch so genannte Überschwingeffekte zeigt, was vorliegend heißt, dass sich kaum ein Regelverhalten erreichen lässt, durch welches sich die Anzahl der für eine Ortung zur Zentrale aufgebauten Verbindungen quasi stetig von unten an den Sollwert annähert. Vielmehr wird es auch vorkommen, dass der Sollwert gelegentlich überschritten wird. Dies gilt es zweckmäßiger Weise bei der Tariffierung des Dienstes zu berücksichtigen.

Bezüglich der Übergabe der Randbedingungen und des Sollwertes ist es denkbar, dass für den Nutzer eine entsprechende Möglichkeit der Konfiguration am MTEG gegeben ist. Praxisgerechter ist es aber möglicherweise, wenn die Konfiguration durch den Dienstanbieter erfolgt. Beispielsweise ist es diesem, auch im Hinblick darauf, dass sich die Zugangskennung bzw. die IP-Adresse des MTEG bei gebräuchlichen Übertragungssystemen häufiger ändert, im Allgemeinen zumindest unmittelbar im Anschluss an den Aufbau einer Verbindung vom MTEG zur Zentrale möglich, selbst Kontakt zum mobilen Telekommunikationsendgerät aufzunehmen und im Zuge dessen entsprechende Daten, insbesondere einen veränderten Sollwert, an die Regeleinheit bzw. deren Software zu übergeben. In der Praxis könnte dies sich so gestalten, dass zwischen dem Nutzer und dem Dienstanbieter aufgrund veränderter Bedingungen - beispielsweise geänderter Gegebenheiten beim Nutzer oder Tarifänderungen beim Dienstanbieter - ein neuer Vertrag abgeschlossen wird und vom Dienstanbieter mit dem Inkrafttreten der Vertragsänderungen bzw. der Änderungen der Bedingungen für die Dienstnutzung entsprechende Werte im Zusammenhang mit einer Ortung an das davon betroffene MTEG übergeben werden.

Die den Programmalgorithmus abarbeitende Recheneinheit kann Bestandteil des MTEG oder der Positionsdatenquelle, beispielsweise eine entsprechenden GPS-Moduls, sein oder in beiden genannten, miteinander gekoppelten Einheiten jeweils zu Teilen untergebracht sein.

Gemäß einer Gestaltungsvariante der Erfindung sind die Soft- und Hardwarekomponenten des Regelkreises Bestandteil des mobilen Telekommunikationsendgerätes, welches jeweils zum Zeitpunkt einer im Ergebnis des iterativen Prozesses vorgesehenen erneuten Übertragung die Positionsdaten an die Zentrale überträgt. Eine andere Möglichkeit besteht darin, dass die Soft- und Hardwarekomponenten des Regelkreises Bestandteil der Positionsdatenquelle sind. Die Positionsdaten werden dabei jeweils zum Zeitpunkt einer im Ergebnis des iterativen Prozesses vorgesehenen erneuten Übertragung von der Positionsdatenquelle an das MTEG übermittelt und dieses zum Aufbau einer Verbindung zur Zentrale sowie zur Übertragung der Positionsdaten an die Zentrale veranlasst. Soweit vorstehend im Zusammenhang mit den Softwarekomponenten als Bestandteile des MTEG (Handy, Smartphone, PDA oder dergleichen) oder der Positionsdatenquelle die Rede ist, heißt dies selbstverständlich nicht, dass die entsprechenden Softwarebestandteile der Regeleinheit zwingend bereits als Firmware in dem MTEG oder der Positionsdatenquelle fest installiert sind. Vielmehr ist natürlich von der Erfindung auch die Möglichkeit umfasst, dass die entsprechenden Softwarekomponenten, wie auch von anderer Anwendungssoftware her bekannt, als gesonderte Softwarepakete käuflich erworben und zur Erweiterung der Funktionalität des jeweiligen Gerätes in diesem installiert bzw. zur Abarbeitung temporär in dieses geladen werden können.

Zur Bereitstellung der Positionsdaten kommt die Nutzung unterschiedlicher Positionsbestimmungssysteme in Betracht. Gemäß einer bevorzugten Möglichkeit handelt es sich bei der Positionsdatenquelle um ein GPS-Modul. Aber auch die Einbeziehung landgestützter Positionsbestimmungssysteme kommt bei entsprechender Auslegung des MTEG hinsichtlich der physischen Ankoppelbarkeit und der Anpassung eventuell verwendeter Datenprotokolle in Betracht. Gemäß einer besonders vorteilhaften Ausgestaltung ist eine als GPS-Modul ausgebildete Positionsdatenquelle integraler Bestandteil des mobilen Telekommunikationsendgerätes.

Für die Regelung kommen im Grunde selbstverständlich alle hierfür bekannten Möglichkeiten der Ausbildung eines entsprechenden Regelkreises in Betracht. Gemäß einer besonders bevorzugten Ausführungsform wird jedoch die mittels der Soft- und Hardwarekomponenten realisierte Regeleinheit als PID-Regler ausgebildet.

Es wurde schon angesprochen, dass abgesehen von dem Sollwert für die Anzahl der innerhalb des festgelegten Intervalls, beispielsweise eines Tages, aufzubauenden Verbindungen zur Positionsdatenübertragung, vorteilhafter Weise noch weitere Randbedingungen in die Regelung einbezogen werden. Gemäß einer praxisgerechten Ausbildung des Trackingsystems erfolgt die Regelung dabei mit der Maßgabe, dass die Wegstrecke, die ein das MTEG mitführendes Objekt oder Subjekt zwischen zwei Ortungen zurücklegt, eine minimale Wegstrecke nicht unterschreitet und eine maximale Wegstecke nicht übersteigt. Das heißt, dass der streckenbezogene Abstand zwischen zwei Verbindungen zur Übertragung von Positionsdaten vom MTEG zur Zentrale einen minimalen Wert nicht unterschreitet und einen maximalen Wert nicht überschreitet. Weiterhin geschieht die Regelung dabei mit der Maßgabe, dass ein minimaler zeitlicher Abstand zwischen Ortungen nicht unterschritten wird. Auf diese Weise lassen sich beispielsweise für das Bewegungsprofil eines bestimmten Fahrzeugs oder einer Person typische Gegebenheiten bereits von vornherein in Form entsprechender Randbedingungen berücksichtigen. So kann beispielsweise verhindert werden, dass bei einer hohen Geschwindigkeit eines mittels des Trackingsystem überwachten Fahrzeugs unnötig viele Ortungen bzw. Verbindungsaufbauten zur Positionsdatenübertragung erfolgen. Ebenso ist es sinnvoll, wenn innerhalb einer festlegbaren Zeitspanne nach dem Unterschreiten einer Mindestgeschwindigkeit eine Ortung bzw. Positionsdatenübertragung erfolgt. So kann beispielsweise nach der Beendigung einer Einsatzfahrt eines Kuriers dessen letzter Standort vor dem Beginn des nächsten Einsatzes erfasst werden.

Gemäß einer Weiterbildung der Erfindung ist es vorgesehen, dass durch eine das MTEG mitführende Person zusätzlich der Aufbau von Verbindungen zur Übertragung von Positionsdaten an die Zentrale manuell veranlasst werden kann. Gegebenenfalls können dabei sogar Randbedingungen, hinsichtlich minimaler oder maximaler zeitlicher oder streckenbezogener Abstände zwischen zwei Verbindungsaufbauten, wie sie für die automatische Regelung vorgegeben sind, ignoriert werden. In diesem Zusammenhang wird aber zweckmäßiger Weise die Anzahl manuell aufzubauender Verbindungen innerhalb des der Regelung zugrunde liegenden Intervalls auf einen Maximalwert begrenzt, welcher einem Bruchteil des Regelsollwerts entspricht. Als sinnvoll hat es sich erwiesen, die Anzahl, der zum Zweck der Ortung manuell aufzubauenden Verbindungen, auf maximal 5 % bis 30 % des für die Anzahl von Verbindungsaufbauten innerhalb des zugrunde liegenden Intervalls vorgegebenen Sollwerts zu begrenzen. Bevorzugt ist eine Begrenzung auf etwa 10 % des Sollwerts. Entsprechend einer vorteilhaften Weiterbildung des erfindungsgemäßen Trackingsystems wird die innerhalb des der Regelung zugrunde liegenden Intervalls gegebene Differenz zwischen dem für die Anzahl von Verbindungsaufbauten vorgegebenen Sollwert und der Anzahl bereits aufgebauter Verbindungen auf einem Display des MTEG angezeigt. Für eine geeignete Visualisierung sind dabei unterschiedliche Möglichkeiten denkbar. So kann die Anzeige unmittelbar zahlenmäßig oder in Form eines Balkens, wie er beispielsweise auch zur Anzeige des Batteriestatus mobiler Geräte Verwendung findet, erfolgen.

Wie bereits Eingangs dargelegt kann die Regelung hinsichtlich der Variation des Abstandes zwischen den Übertragungen von Positionsdaten zeit- oder streckenbezogen oder aber auch zeit- und streckenbezogen erfolgen. In der Art eines Ausführungsbeispiels soll die Erfindung nachfolgend, im Hinblick auf einen streckenbezogenen Ansatz, nochmals näher erläutert werden, wobei sich das Ausführungsbeispiel auf ein Regelintervall von 24 h, also einen Tag bezieht. Mit Hilfe eines vorzugsweise durch die Software des zu überwachenden autarken mobilen Gerätes (MTEG) realisierten Timers wird die Berechnung der Strecke $S_{(t_0)}$ zur nächsten Ortung, das heißt zur nächsten durch eine Übertragung entsprechender Positionsdaten bekannt gegebenen Position, angestoßen. Dabei wird zunächst die Anzahl $N_{(t_0)}$ der bereits zuvor vorgenommenen Ortungen gezählt. Falls in einem entsprechenden Intervall keine Ortungen erfolgt sind, wird dieser Regelungszeitraum nicht berücksichtigt und stattdessen der vorherige Zeitraum betrachtet. Als Regelgröße wird ein Wert $\lambda$ eingeführt, der sich aus der Regelungszeit und dem Regelungstimer wie folgt bestimmt:

$$\lambda = t_r / \Delta t$$

Hieraus ergibt sich dann für die Strecke bis zur nächsten Ortung bzw. Positionsdatenübertragung and die Zentrale, die so genannte Perlenwurflänge $s_{(t_0)}$, folgende Beziehung:

$$s_{(t_0)} = s_{(t_0 - \Delta t)} \bullet (1 + (N_{(t_0)} / N_{soll} - 1) / \lambda)$$

Für diese Integrationsbeziehung ist dann lediglich noch zu berücksichtigen, dass $s_{(t_0)}$ sinnvoll festzulegende Werte $S_{min}$ und $S_{max}$, also minimale Strecke zwischen zwei Ortungen und maximale Strecke zwischen zwei Ortungen, nicht unterbeziehungsweise überschreitet. Um zu vermeiden, dass im Falle einer Bewegung des Objektes beziehungsweise des Gerätes mit einer sehr großen Geschwindigkeit unnötig viele Ortungen durchgeführt werden, wird außerdem ein Wert $t_{min}$ eingeführt, welcher einen kürzestmöglichen Zeitraum zwischen zwei Ortungen beziehungsweise Übertragungen von Positionsdaten definiert. Bei einer in die Praxis umgesetzten Anwendung haben sich beispielsweise folgende Parameter als sinnvoll erwiesen:

| | |
|---|---|
| $N_{soll} =$ | 100, 200, 400 |
| $S_{start} =$ | 1.000 m |
| $t_r =$ | 24 h = 1.440 min = 86.400 s |
| $\Delta t =$ | 6min=360s |
| $t_{timer} =$ | 10 S |
| $\lambda =$ | 240 |
| $t_{Int} =$ | 24 h = 1.440 min = 86.400 s (Intervall) |
| $S_{min} =$ | 250 m |
| $S_{max} =$ | 5.000 m |
| $t_{min} =$ | 120 S |
| $V_{min} =$ | 5,0 km/h = ca. 1,4 m/s |
| $t_{still} =$ | 10 min = 600 s |

Das dargestellte System ermöglicht es, dem Nutzer eines entsprechenden, die Positionsverfolgung bereitstellenden Dienstes mit dem Dienstbetreiber eine unter Kostengesichtspunkten günstige Zahl von Ortungen pro Tag festzulegen und beim Betreiber zu buchen. Diese festgelegte und kostenmäßig untersetzte Anzahl wird dann durch das beschriebene System unter Berücksichtigung der weiteren Vorgaben durch die automatische Selbstkalibrierung in optimaler Weise auf eine Überwachungsstrecke und/oder einen Überwachungszeitraum aufgeteilt.

**Patentansprüche**

1. Trackingsystem, mit einem mobilen Telekommunikationsendgerät, einer Positionsdatenquelle eines Positionsbestimmungssystems zur Bereitstellung von Positionsdaten, welche einen augenblicklichen Aufenthaltsort des mobilen Telekommunikationsendgerätes beschreiben, und mit einer Zentrale, bei welcher zumindest der zuletzt festgestellte Aufenthaltsort des mobilen Telekommunikationsendgerätes durch einen dazu berechtigten Nutzer des Trackingsystems abfragbar ist, wobei die Positionsdaten von der Positionsdatenquelle an das mobile Telekommunikationsendgerät übermittelt oder durch dieses von der Positionsdatenquelle abgerufen und über eine von dem mobilen Telekommunikationsendgerät zur Zentrale aufgebaute Telekommunikationsverbindung wiederholt an die Zentrale übertragen werden, **dadurch gekennzeichnet, dass** Soft- und Hardwarekomponenten des mobilen Telekommunikationsendgerätes und/oder der Positionsdatenquelle die Regeleinheit eines Regelkreises ausbilden, dessen Regelgröße die Anzahl der innerhalb eines festgelegten Intervalls vom mobilen Telekommunikationsendgerät zu der Zentrale jeweils zum Zweck der Übertragung von Positionsdaten hergestellten Verbindungen ist, wobei das Trackingsystem derart ausgestaltet ist, dass er Abstand zwischen den Positionsdatenübertragungen auf der Grundlage eines iterativen Prozesses im Hinblick auf ein örtlich und/oder zeitlich möglichst hoch aufgelöstes Bewegungsbild eines das mobile Telekommunikationsendgerät mitführenden beweglichen Objekts oder Subjekts, bei gleichzeitiger Zugrundelegung einer innerhalb des festgelegten Intervalls als Sollwert vorgegebenen Anzahl entsprechender Verbindungen, zeitlich und/oder streckenbezogen variiert wird.

2. Trackingsystem nach Anspruch 1, **dadurch gekennzeichnet, dass** die Soft- und Hardwarekomponenten des Regelkreises Bestandteil des mobilen Telekommunikationsendgerätes sind, welches jeweils zum Zeitpunkt einer im Ergebnis des iterativen Prozesses vorgesehenen erneuten Übertragung die Positionsdaten an die Zentrale überträgt.

3. Trackingsystem nach Anspruch 1, **dadurch gekennzeichnet, dass** die Soft- und Hardwarekomponenten des Regelkreises Bestandteil der Positionsdatenquelle sind, welche derart ausgestaltet ist, dass jeweils zum Zeitpunkt einer im Ergebnis des iterativen Prozesses vorgesehenen erneuten Übertragung Positionsdaten an das mobile Telekommunikationsendgerät übermittelt und dieses zum Aufbau einer Verbindung zur Zentrale sowie zur Übertragung der Positionsdaten an die Zentrale veranlasst.

4. Trackingsystem nach einem der Ansprüche 1 bis 3, **dadurch gekennzeichnet, dass** es sich bei der Positionsdatenquelle um ein GPS-Modul handelt.

5. Trackingsystem nach Anspruch 4, **dadurch gekennzeichnet, dass** das GPS-Modul integraler Bestandteil des mobilen Telekommunikationsendgerätes ist.

6. Trackingsystem nach einem Ansprüche 1 bis 5, **dadurch gekennzeichnet, dass** die mittels Soft- und Hardwarekomponenten realisierte Regeleinheit als ein PID-Regler ausgebildet ist.

7. Trackingsystem nach Anspruch 1 oder 6, **dadurch gekennzeichnet, dass** die Regelung mit der Maßgabe erfolgt, dass hinsichtlich des streckenbezogenen Abstandes zwischen zwei Verbindungen zur Übertragung von Positionsdaten vom mobilen Telekommunikationsendgerät zur Zentrale, welcher der zwischen zwei Verbindungen von dem das mobile Telekommunikationsendgerät mitführenden Objekt oder Subjekt zurückgelegten Wegstrecke entspricht, eine minimale Wegstrecke nicht unterschritten und eine maximale Wegstrecke nicht überschritten wird und dass hinsichtlich des zeitbezogenen Abstandes zwischen zwei Verbindungsaufbauten eine minimale Zeitdauer nicht unterschritten wird.

8. Trackingsystem nach Anspruch 1 oder 7, **dadurch gekennzeichnet, dass** bei Unterschreiten einer minimalen Bewegungsgeschwindigkeit eines das mobile Telekommunikationsendgerät mitführenden Objekts oder Subjekts innerhalb einer festgelegten Zeitspanne eine Übertragung von Positionsdaten erfolgt, so dass dessen letzter Standort vor einer länger andauernden Unterbrechung seiner Bewegung in der Zentrale erfasst wird.

9. Trackingsystem nach Anspruch 1 oder 7, **dadurch gekennzeichnet, dass** der Aufbau einer Verbindung zur Übertragung von Positionsdaten an die Zentrale durch eine das mobile Telekommunikationsendgerät mitführende Person manuell veranlassbar ist.

10. Trackingsystem nach Anspruch 9, **dadurch gekennzeichnet, dass** eventuelle für die automatische Regelung bestehende Randbedingungen, hinsichtlich minimaler oder maximaler zeitlicher oder streckenbezogener Abstände zwischen zwei Verbindungsaufbauten, im Falle eines manuellen Verbindungsaufbaus ignoriert werden.

11. Trackingsystem nach Anspruch 9 oder 10, **dadurch gekennzeichnet, dass** die Anzahl manuell aufzubauender Verbindungen innerhalb des der Regelung zugrunde liegenden Intervalls auf maximal 5 % bis 30 % des für die Anzahl von Verbindungsaufbauten vorgegebenen Sollwerts begrenzt wird.

12. Trackingsystem nach Anspruch 11, **dadurch gekennzeichnet, dass** die Anzahl manuell aufzubauender Verbindungen innerhalb des der Regelung zugrunde liegenden Intervalls auf maximal 10 % des für die Anzahl von Verbindungsaufbauten vorgegebenen Sollwerts begrenzt wird.

13. Trackingsystem nach Anspruch 1 oder 9, **dadurch gekennzeichnet, dass** die innerhalb des der Regelung zugrunde liegenden Intervalls gegebene Differenz zwischen dem für die Anzahl von Verbindungsaufbauten vorgegebenen Sollwert und der Anzahl bereits aufgebauter Verbindungen auf einem Display des mobilen Telekommunikationsendgerät visualisiert wird.

**Claims**

1. Tracking system with a mobile telecommunications terminal, with a position data source of a position-determining system for providing position data that describe a present location of the mobile telecommunications terminal, and with a central office at which at least the last identified location of the mobile telecommunications terminal can be queried by a user of the tracking system who is authorized for this function, wherein the position data are transmitted from the position data source to the mobile telecommunications terminal or are read by said terminal from the position data source and are repeatedly transmitted to the central office by the mobile telecommunications terminal through a telecommunications connection established with the central office, **characterized in that** software and hardware components of the mobile telecommunications terminal and/or of the position data source constitute the control element of a control loop whose controlled variable is the number of connections established from the mobile telecommunications terminal to the central office within a specified interval for the purpose of transmitting position data, wherein the tracking system is designed such that the interval between position data transmissions is varied over time and/or distance on the basis of an iterative process with regard to the best possible spatial and/or temporal resolution for a picture of the movement of a mobile object or subject carrying the mobile telecommunications terminal and, at the same time, on the basis of a number of corresponding connections within the defined interval that has been predefined as a target value.

2. Tracking system according to claim 1, **characterized in that** the software and hardware components of the control loop are part of the mobile telecommunications terminal that transmits the position data to the central office at the time for each new transmission determined by the result of the iterative process.

3. Tracking system according to claim 1, **characterized in that** the software and hardware components of the control loop are part of the position data source, which is designed such that, at the time for each new transmission determined by the result of the iterative process, it transmits position data to the mobile telecommunications terminal and causes the latter to establish a connection to the central office and transmit the position data to the central office.

4. Tracking system according to any one of claims 1 through 3, **characterized in that** the position data source is a GPS module.

5. Tracking system according to claim 4, **characterized in that** the GPS module is an integral part of the mobile telecommunications terminal.

6. Tracking system according to any one of claims 1 through 5, **characterized in that** the control unit implemented by the software and hardware components is designed as a PID controller.

7. Tracking system according to claim 1 or 6, **characterized in that** control is performed subject to the condition that, with regard to the spatial separation between two connections for transmitting position data from the mobile telecommunications terminal to the central office corresponding to the distance traveled between two connections by the object or subject carrying the mobile telecommunications terminal, a minimum distance is not violated and a maximum distance is not exceeded, and **in that**, with regard to the temporal separation between the establishment of two connections, a minimum time spacing is not violated.

8. Tracking system according to claim 1 or 7, **characterized in that** a transmission of position data takes place within a predefined time interval in the event that a minimum speed of an object or subject carrying the mobile telecommunications terminal drops below a minimum speed, so that the last location of the object or subject prior to an extended interruption in its motion is recorded in the central office.

9. Tracking system according to claim 1 or 7, **characterized in that** the establishment of a connection for transmitting position data to the central office can be initiated manually by a person carrying the mobile telecommunications terminal.

10. Tracking system according to claim 9, **characterized in that** any boundary conditions that may exist for the automatic control regarding minimum or maximum time intervals or distances between the establishment of two connections are ignored in the event of manual connection establishment.

11. Tracking system according to claim 9 or 10, **characterized in that** the number of manually established connections within the interval on which the control is based is limited to a maximum of 5% to 30% of the target value predefined for the number of connection establishments.

**12.** Tracking system according to claim 11, **characterized in that** the number of manually established connections within the interval on which the control is based is limited to a maximum of 10% of the target value predefined for the number of connection establishments.

**13.** Tracking system according to claim 1 or 9, **characterized in that**, within the interval on which the control is based, the difference between the target value predefined for the number of connection establishments and the number of connections already established is visualized on a display of the mobile telecommunications terminal.

**Revendications**

**1.** Système de suivi de position comportant un équipement terminal de télécommunications mobile, une source de données de position d'un système de détermination de la position permettant de délivrer des données de position décrivant une position instantanée de l'équipement terminal de télécommunications mobile, et un central interrogeable par l'utilisateur autorisé du système de suivi de position pour connaître au moins la dernière position déterminée de l'équipement terminal de télécommunications mobile, les données de position étant communiquées, par la source de données de position, à l'équipement terminal de télécommunications mobile ou extraites par ce dernier de la source de données de position, et transmises de manière récurrente au central par l'intermédiaire d'une liaison de télécommunications établie par l'équipement terminal de télécommunications mobile vers le central, **caractérisé en ce que** des composants logiciels et matériels de l'équipement terminal de télécommunications mobile et/ou de la source de données de position forment l'unité de régulation d'une boucle de régulation dont la grandeur à régler est le nombre des liaisons établies par l'équipement terminal de télécommunications mobile vers le central, dans un intervalle déterminé, respectivement pour transmettre des données de position, le système de suivi de position étant conçu de manière telle que l'intervalle entre les transmissions de données de position varie temporellement et/ou par rapport au trajet selon un processus itératif au regard d'une image de déplacement à résolution locale et/ou temporelle la plus grande possible d'un objet ou d'un sujet mobile portant l'équipement terminal de télécommunications mobile, tout en se basant sur un nombre prédéterminé de liaisons correspondantes dans l'intervalle déterminé comme valeur de consigne.

**2.** Système de suivi de position selon la revendication 1, **caractérisé en ce que** les composants logiciels et matériels de la boucle de régulation font partie intégrante de l'équipement terminal de télécommunications mobile qui, à chaque fois que le résultat du processus itératif prévoit une nouvelle transmission, transmet les données de position au central.

**3.** Système de suivi de position selon la revendication 1, **caractérisé en ce que** les composants logiciels et matériels de la boucle de régulation font partie intégrante de la source de données de position qui est conçue de manière telle qu'à chaque fois que le résultat du processus itératif prévoit une nouvelle transmission, elle transmet des données de position à l'équipement terminal de télécommunications mobile et l'incite à établir une liaison vers le central et à transmettre les données de position au central.

**4.** Système de suivi de position selon l'une des revendications 1 à 3, **caractérisé en ce que** la source de données de position est un module GPS.

**5.** Système de suivi de position selon la revendication 4, **caractérisé en ce que** le module GPS fait partie intégrante de l'équipement terminal de télécommunications mobile.

**6.** Système de suivi de position selon l'une des revendications 1 à 5, **caractérisé en ce que** de l'unité de régulation obtenue au moyen de composants logiciels et matériels est réalisée sous la forme d'un régulateur PID.

**7.** Système de suivi de position selon l'une des revendications 1 ou 6, **caractérisé en ce que** la régulation s'effectue à condition que l'intervalle, rapporté au trajet parcouru, entre deux liaisons de transmission de données de position de l'équipement terminal de télécommunications mobile vers le central correspondant au trajet parcouru par l'objet ou le sujet portant l'équipement terminal de télécommunications mobile entre deux liaisons, ne soit ni inférieur à un trajet minimal ni supérieur à un trajet maximal et **en ce que** l'intervalle temporel entre deux établissements de liaison ne soit pas inférieur à une durée minimale.

**8.** Système de suivi de position selon l'une des revendications 1 ou 7, **caractérisé en ce que**, si une vitesse de déplacement minimale d'un objet ou d'un sujet portant l'équipement terminal de télécommunications mobile est inférieure à une vitesse minimale dans l'intervalle déterminé, une transmission de données de position à lieu de manière que la dernière position de celui-ci soit détectée par le central avant que n'intervienne une interruption prolongée de son déplacement.

**9.** Système de suivi de position selon l'une des revendications 1 ou 7, **caractérisé en ce que** l'établissement d'une liaison de transmission de données de position vers le central peut être déclenché manuellement par une personne portant l'équipement terminal de télécommunications mobile.

**10.** Système de suivi de position selon la revendication 9, **caractérisé en ce que** des conditions aux limites éventuellement existantes pour la régulation automatique concernant des intervalles minima ou maxima, temporels ou rapportés au trajet, entre deux établissements de liaison sont ignorées dans le cas d'un établissement manuel de liaison.

**11.** Système de suivi de position selon l'une des revendications 9 ou 10, **caractérisé en ce que** le nombre de liaisons à établir manuellement dans l'intervalle servant de base à la régulation est limité à 5 % à 30 % maximum de la valeur de consigne prédéterminée pour le nombre d'établissements de liaison.

**12.** Système de suivi de position selon la revendication 11, **caractérisé en ce que** le nombre de liaisons à établir manuellement dans l'intervalle servant de base à la régulation est limité à 10 % maximum de la valeur de consigne prédéterminée pour le nombre d'établissements de liaison.

**13.** Système de suivi de position selon l'une des revendications 1 ou 9, **caractérisé en ce que** la différence donnée dans l'intervalle servant de base à la régulation, entre la valeur de consigne prédéterminée pour le nombre d'établissements de liaison et le nombre de liaisons déjà établies, s'affiche à un écran de l'équipement terminal de télécommunications mobile.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020156578 A